# EUROPEAN PATENT APPLICATION

(11) **EP 4 725 691 A1**
(43) Date of publication of application: **15.04.2026**
(21) Application number: 24206523.3
(22) Date of filing: 14.10.2024
(51) Int. Cl.: B32B 7/14, C08L 29/04, C08L 67/00, C09J 129/04, C09J 167/00

(54) **TIE LAYER COMPOSITION FOR POLYMER FILMS**

(71) Applicant: Aquapak IP Limited, Birmingham B31 5HE (GB)
(72) Inventor: The designation of the inventor has not yet been filed
(74) Representative: Hepworth Browne

(57) **Abstract**

A tie layer composition comprises:
a reaction product of a polyvinyl alcohol polymer composition or a composition comprising a blend of two or more polyvinyl alcohols, the polyvinyl alcohol composition being thermally processable and having a degree of hydrolysis in the range of 65 wt% or greater;
a biodegradable polyester selected from the group consisting of: polylactic acid (PLA); polyhydroxy alkanoates (PHA); polybutylene adipate terephthalate (PBAT); polybutylene succinate (PBS); polybutylene succinate co-butylene adipate (PBSA); polyglycolic acid (PGA); polybutylene succinate co-terephthalate (PBST); polybutylene adipate co-furanoate (PBAF); polyethylene furoanate (PBF) and polycaprolactam (PCL);
a plasticiser comprising one or more compounds selected from the group consisting of: diglycerol, triglycerol, xylose, D-mannitol, dipentaerythritol, triacetin, 1,4-butanediol, 3,3-dimethyl-1,2-butanediol, caprolactam and caprolactone; and
a stabilizer selected from the group consisting of: sodium stearate, potassium oleate, sodium benzoate, calcium stearate and mixtures thereof.

## Description

This invention relates to a composition which may be used as a tie layer between layers of different polymers, particularly but not exclusively between films or sheets, for example used in the manufacture of bags or other packaging products.

The packaging products find particular application for food-stuffs or pharmaceutical applications. The invention also relates to the tie layers and polymer products incorporating the tie layers and methods of manufacture thereof.

The requirements for films or sheets used in bags or other packaging applications, including oxygen and water barrier properties, toughness and heat sealability, cannot be met by any one polymer. As a result, multiple layers of two or more polymers have been employed, each layer playing a part in meeting the design requirements. The layers may be combined by co-extrusion or lamination. Most of the polymers used in these layers do not naturally adhere to each other in a film making or lamination process without the use of tie layers. Adhesive resins have been sandwiched between the polymers as tie layers, but these resins require a separate manufacturing step and may not be biodegradable. A matrix resin may be chosen to be compatible with the polymer on one side to promote intermolecular diffusion at that interface and a reactive component may be added to bond to the other side.

A conventional film may comprise five layers, for example two outer layers of polyethylene, a central barrier layer of ethylene vinyl alcohol and two tie layers, one located between the central layer and a respective outer layer. A problem with previously known multiple layer films is that they are complex to manufacture and are not compostable. Manufacture of multilayer films is complicated by the need to extrude and combine films of polymers having different melting points. Also previously used films of different polymers may have a tendency to crosslink, resulting in polymer products which are more difficult to compost.

Polyvinyl alcohol (abbreviated in this specification to PVOH) is a biocompatible, biodegradable, and non-toxic water-soluble polymer. It also possesses good mechanical and barrier properties. It is a semicrystalline polymer comprising amorphous phases and some amount of crystallinity. The properties of PVOH generally depend on the molecular weight and degree of hydrolysis. The presence of many hydroxyl groups on the surface makes it one of the most hydrophilic polymers with high moisture sensitivity. It is advantageous to use plasticizers for PVOH to control the melting temperature and thermal stability, especially for use in an extrusion process. The resulting blends and composite materials of PVOH have become popular for packaging applications. Although this polymer exhibits good properties for example excellent oxygen barrier properties, it also has some drawbacks such as poor water vapour barrier and low thermal resistance.

Polyvinyl alcohol is made by hydrolysis of polyvinyl acetate. The degree of hydrolysis affects the properties of the polymer. Polyvinyl alcohol having a low degree (LD) of hydrolysis, for example below 84%, is easier to process and is therefore widely used in industry. Copolymers are also easier to process. Vinyl acetate copolymers, for example, with ethylene acetate have been used to make vinyl alcohol co-polymers which are easier to process. However, these co-polymers lack the advantageous physical properties of homopolymeric polyvinyl alcohol, particularly highly hydrolysed polyvinyl alcohol homopolymer. The present invention relates particularly to homopolymeric polyvinyl alcohol which may be made by hydrolysis of homopolymeric polyvinyl acetate.

Highly hydrolysed homopolymeric polyvinyl acetate, (referred to as "high degree of hydrolysis," or HD) for example with a degree of hydrolysis greater than 88%, is a polymer which essentially comprises homopolymeric polyvinyl alcohol. This polymer, similar to many carbohydrates, decomposes before the melting point of about 250°C is reached. This makes melt processing difficult. For this reason the highly hydrolysed polymer has been previously processed as an aqueous solution. Partially hydrolysed polyvinyl alcohol is more easily melt processed than polyvinyl alcohol with a higher degree of hydrolysis. For example, 80 wt% hydrolysed polyvinyl alcohol, can be readily extruded or converted into film by blow molding.

A significant difference between highly hydrolysed and partially hydrolysed ("low degree of hydrolysis," or LD) polyvinyl alcohols is the extent and quality of the crystalline order due to the differences in the chain structures. Polyvinyl alcohols with less than 2% non-hydrolysed acetate groups can readily crystallise to form strongly hydrogen bonded crystalline domains. These crystalline domains have a structure which is essentially the same as found in polyethylene. The reason for this may be attributed to the small size of the hydroxyl group. However, because of the hydrogen bonding, the melting point of highly hydrolysed polyvinyl alcohol is about 150°C higher than that of polyethylene. Polyols have been used as plasticisers, but efficient manufacture of plasticised polyvinyl alcohol with a high degree of hydrolysis has been difficult to achieve.

WO2017/046361, WO2022/008516 and WO2022/008521, the disclosures of which are incorporated into this specification by reference for all purposes, disclose methods for manufacture of a thermally-processable plasticised polyvinyl alcohol.

According to a first aspect of the present invention, a tie layer composition comprises:
a reaction product of a polyvinyl alcohol polymer composition or a composition comprising a blend of two or more polyvinyl alcohols, the polyvinyl alcohol composition being thermally processable and having a degree of hydrolysis in the range of 65 wt% or greater;
a biodegradable polyester selected from the group consisting of: polylactic acid (PLA); polyhydroxy alkanoates (PHA); polybutylene adipate terephthalate (PBAT); polybutylene succinate (PBS); polybutylene succinate co-butylene adipate (PBSA); polyglycolic acid (PGA); polybutylene succinate co-terephthalate (PBST); polybutylene adipate co-furanoate (PBAF); polyethylene furoanate (PBF) and polycaprolactam (PCL);
a plasticiser comprising one or more compounds selected from the group consisting of: diglycerol, triglycerol, xylose, D-mannitol, dipentaerythritol, triacetin, 1,4-butanediol, 3,3-dimethyl-1,2-butanediol, caprolactam and caprolactone; and
a stabilizer selected from the group consisting of: sodium stearate, potassium oleate, sodium benzoate, calcium stearate and mixtures thereof.

The degree of hydrolysis may be in the range of 65 wt% to 95 wt%, for example from 65 wt% to 92 wt%.

The biodegradable polyester may be selected from the group consisting of:
polylactic acid (PLA); polyhydroxy alkanoates (PHA); polybutylene adipate terephthalate (PBAT); and polycaprolactam (PCL).

The composition may also comprise a processing aid. The processing aid is usally water, although other hydroxy compounds may be used instead or in addition to water.

In a first embodiment, the tie layer composition comprises:

| | |
|---|---|
| a thermally processable polyvinyl alcohol composition | 85 wt% to 99 wt%; and |
| a biopolymer composition | 1 wt% to 15 wt%. |

This composition finds particular application in bonding to barrier layers comprising polyvinyl alcohol.

In a second embodiment, the tie layer composition comprises thermally

| | |
|---|---|
| processable polyvinyl alcohol composition | 1 wt% to 20 wt%; and |
| a biopolymer composition | 80 wt% to 99 wt%. |

The tie layer composition may consist, or consist essentially, of the recited ingredients.

The term "consisting of" is used in this specification to refer to compositions which include only the recited ingredients, disregarding trace amounts of any impurities.

The term "consisting essentially of" is used in this specification to refer to compositions which consist of the recited ingredients with the possible addition of minor amounts of any further ingredients which do not substantially alter the essential refrigerant properties of the composition. These compositions include compositions which consist of the recited ingredients. Compositions which consist of the recited ingredients may be particularly advantageous.

The tie layer composition may include a compatibiliser.

A vinyl actetate-ethylene co-polymer may be employed, for example as manufactured by Wacker under the trade name Vinnex 2504. This compatibiliser may be used for blown film, cast extrusion and extrusion coating applications.

Use of a PVOH composition including plasticiser and stabiliser ingredients is advantageous in reducing degradation of the polymers, particularly the biopolymer during processing including any subsequent processing such as film extrusion. In previously known processes, the melting point of unplasticized or poorly plasticised PVOH may be greater than the degradation temperature of the biopolymers. The compositions of the present invention are advantageous in comparison to previously disclosed proposals to combine PVOH with biopolymers.

According to a second aspect of the present invention a method of manufacture of a tie layer composition comprises the steps of;
providing ingredients comprising:
a polyvinyl alcohol composition comprising polyvinyl alcohol or a blend thereof having a degree of hydrolysis in the range of 65 wt% or greater;
a processing aid, a plasticiser and a reactive stabiliser;
wherein the plasticiser is selected from the group consisting of: diglycerol, triglycerol, xylose, D-mannitol, triacetin, dipentaerythritol, 1,4-butanediol, 3,3-dimethyl-1,2-butanediol, caprolactam, caprolactone, and mixtures thereof;
wherein the stabiliser is selected from the group consisting of:
   sodium stearate, potassium oleate, sodium benzoate, calcium stearate, dimethyl propionic acid, and mixtures thereof; and
   a biopolymer selected from the group consisting of: polylactic acid (PLA); polyhydroxy alkanoates (PHA); polybutylene adipate terephthalate (PBAT); polybutylene succinate (PBS); polybutylene succinate co-butylene adipate (PBSA); polyglycolic acid (PGA); polybutylene succinate co-terephthalate (PBST); polybutylene adipate co-furanoate (PBAF); polyethylene furoanate (PBF) and polycaprolactam (PCL);introducing the ingredients into a mixing reactor;
   wherein the mixing reactor comprises a blending chamber having a primary inlet, a primary outlet and at least two inter-engaging components extending between the primary inlet and primary outlet, the components being arranged to apply a shearing force to the polymer while the polymer is conveyed by the components from the inlet through a reaction zone to the outlet; and
   wherein the blending chamber comprises a plurality of heated regions arranged so that the mixture is subjected to a temperature profile whereby the temperature increases from the inlet to the outlet;
   a secondary outlet located between the reaction zone and primary outlet arranged to allow removal of processing aid from the chamber;
   the process comprising the steps of:
      reacting the polyvinyl alcohol and biopolymer in the reaction zone to form a co-compound of the polymers; and
      allowing the tie layer composition to pass from the primary outlet.

The biodegradable polyester may be selected from the group consisting of: polylactic acid (PLA); polyhydroxy alkanoates (PHA); polybutylene adipate terephthalate (PBAT); and polycaprolactam (PCL).

According to a further aspect of the present invention, a polymer film comprises a barrier layer comprising a polyvinyl alcohol composition; and
a tie layer engaged with the barrier layer, the tie layer comprising a composition in accordance with the first aspect of the present invention.

According to a further aspect of the present invention, a multi layered polymer film comprises:
an inner layer comprising a polyvinyl alcohol composition;
two outer layers, each outer layer located on a respective side of the inner layer, the outer layers comprising a biopolyester selected from the group consisting of:
   polylactic acid (PLA); polyhydroxy alkanoates (PHA); polybutylene adipate terephthalate (PBAT); polybutylene succinate (PBS); polybutylene succinate co-butylene adipate (PBSA); polyglycolic acid (PGA); polybutylene succinate co-terephthalate (PBST); polybutylene adipate co-furanoate (PBAF); polyethylene furoanate (PBF) and polycaprolactam (PCL);a tie layer located between the inner layer and a respective outer layer;
   wherein the tie layer comprises a composition in accordance with the first aspect of the present invention.

The biodegradable polyester may be selected from the group consisting of:
polylactic acid (PLA); polyhydroxy alkanoates (PHA); polybutylene adipate terephthalate (PBAT); and polycaprolactam (PCL).

In an embodiment, the tie layer consists of a polyvinyl alcohol composition and polybutylene adipate terephthalate (PBAT).

Alternatively, the tie layer consists of a polyvinyl alcohol composition and polylactic acid (PLA).

Alternatively, the tie layer consists of a polyvinyl alcohol composition and polyhydroxy alkanoate (PHA).

Alternatively, the tie layer consists of a polyvinyl alcohol composition and polycaprolactone (PCL).

Use of the tie layer composition of the present invention has the advantage that a polyvinyl alcohol composition can be used as an inner layer providing good barrier properties and preventing passage of both oxygen and moisture, with the additional advantage of being compostable after use. The tie layer and polyvinyl alcohol layer bond securely avoiding any need for an adhesive.

The polyvinyl alcohol is preferably homopolymeric polyvinyl alcohol.

Use of homopolymeric polyvinyl alcohol is particularly advantageous. Homopolymeric polyvinyl alcohol is manufactured by hydrolysis of homopolymeric polyvinyl acetate. The degree of hydrolysis is 65 wt% or more in embodiments of this invention. Polyvinyl alcohol co-polymers made by hydrolysis of polyvinyl acetate co-polymers have inferior properties compared to homopolymeric polyvinyl alcohol. Homopolymeric polyvinyl alcohol may exhibit particularly advantageous properties, including high tensile strength and flexibility.

In manufacture of the tie layer composition, the ingredients of the PVOH composition and the biopolymer are both introduced into the mixing apparatus before the heating and reaction steps are carried out.

In an alternative embodiment the ingredients of the PVOH composition may be heated and reacted together, for example by passage through an extruder, in order to form a plasticised PVOH composition, which is subsequently mixed and reacted with the biopolymer in a two stage process.

Reaction of the unreacted ingredients of the PVOH composition simultaneously with the biopolymer is advantageous. This one step process provides a co-compound which unexpectedly has advantageous properties in comparison to both the starting materials and particularly to a product of the two stage process disclosed in the preceding paragraph.

The temperature necessary to cause plasticisation of the PVOH and simultaneous reaction with the biopolymer, may be lower than the temperature which is necessary to cause plasticisation of the PVOH in the absence of the biopolymer.

Reaction of the polyvinyl alcohol composition and polyester may be carried out in a mixing reactor, for example, in an extruder, at a temperature in the range of 150°C to 210°C. These processing conditions are advantageous in comparison to the higher processing temperature for pure polyvinyl alcohol which may be in the range of 190°C to 225°C. Use of the lower temperature has been found to reduce a likelihood of local overheating and degradation, particularly during commercial scale production.

The relative amounts of the polyvinyl alcohol component and the biopolymer may be selected in accordance with the desired properties and intended uses of compositions in accordance with this invention. The ratio of the polyvinyl alcohol composition to biopolymer may be in the range of 99 wt% to 1 wt% to 1 wt% to 99 wt%, preferably 98 wt% to 2 wt% to 2 wt% to 98 wt%, for example, 40 wt% to 60 wt% to 60 wt% to 40 wt%, dependent on the required properties. Compositions with a high proportion of PVOH may be preferred for food packaging applications. The required properties may include one or more of clarity, barrier properties, tensile strength and biodegradability.

The stabilisers used in this invention may particularly decrease the extent of degradation of the polyvinyl alcohol during subsequent processing. Homopolymeric polyvinyl alcohol has been difficult to process due to degradation at the high temperatures required for processing. The liability to degradation has previously led to use of polyvinyl alcohol co-polymers with a consequent loss of engineering properties. This can be seen by UV spectral analysis of the amount of conjugation present in the polymer. Sodium benzoate has been found to be a particularly effective stabiliser.

Use of a stabiliser of this invention may result in an advantageous reduction in the extent of degradation during melt processing of the composition for example, to form a film, or subsequent processing of the film. This improves the reaction conditions and allows homopolymeric polyvinyl alcohol having a high degree of hydrolysis, for example 88 wt% or higher, to be processed and reacted with the biopolymer.

The stabiliser may be used in an amount of about 0.1 wt% to about 5 wt%, for example about 0.1 wt% to about 3 wt%, for example 0.1 wt% to about 1.5 wt%, for example from about 0.2 wt% to about 0.5 wt%, for example about 0.25 wt%.

The present invention provides biobased tie layer compositions which exhibit unique ranges of functional properties. Exemplary compositions exhibit increased rates of biodegradation in both aerobic and anaerobic conditions in comparison to pure polyvinyl alcohol.

A blend of two or more polyvinyl alcohol polymers may be employed, for example a blend of two polyvinyl alcohol polymers with a relatively high weight average molecular weight and a relatively low weight average molecular weight respectively.

Alternatively a blend of polyvinyl alcohol polymers with the same weight average molecular weight and different degrees of hydrolysis may be employed. Blending different polyvinyl alcohol grades together enables the properties of the resultant polymer to be enhanced, for example melt strength. This facilitates film formation by melt extrusion.

An exemplary blend of two polyvinyl alcohol polymers with a weight average molecular weight in the range 22,000 to 38,000, a first polymer having a relatively low degree of hydrolysis and a second polymer having a relatively high degree of hydrolysis may be blended in a ratio of 40:60 to 60:40, for example about 50:50 by weight.

The blends of different molecular weight polymers employed may be selected in accordance with the physical properties required in the finished product. Use of more than two different molecular weight polymers may be advantageous. The use of a single molecular weight polymer is not precluded.

Molecular weights referred to in this specification are weight average molecular weights. These may be determined by conventional methods, for example, by gel permeation, chromatography (GPC).

Use of a blend may allow control of the viscosity of the polymer. Selection of a stabiliser in accordance with the present invention allows use of blends of a desired viscosity without a loss of other properties. Alternatively, use of a blend may permit use of polyvinyl alcohol with one or more stabilisers while maintaining viscosity or other properties to permit manufacture of films.

The processing aid is preferably water. Alternatively, the processing aid may comprise a mixture of water and one or more hydroxyl compounds with a boiling point less than the melting point of the plasticiser. Use of water is preferred for cost and environmental reasons.

The amount of water in the unreacted ingredients may be in the range of 2 wt% to 20 wt% for example 3 wt % to 10 wt%.

In advantageous embodiments a binary composition of the plasticisers of the first embodiment is employed.

The total amount of plasticiser in the polyvinyl alcohol component may be from about 15 wt% to about 30 wt%.

Various biodegradable polyesters may be used in accordance with this invention.

Polyhydroxy alkanoates (PHAs) are a family of fully bio-based and biodegradable polyesters derived from bacterial fermentation. PHAs possess good physical properties such as low melting points which can ease the processability, good barrier properties, good flexibility, etc. Two types of PHAs were employed: P3HB (poly-3-hydroxybutyrate) and P3HB4HB (poly-3-hydroxybutyrate-co-4-hydroxybutyrate). In comparison to P3HB, the P3HB4HB exhibited better thermal resistance and was more flexible due to the P4HB unit. Applications in accordance with this invention include food packaging, packaging films, medical and healthcare applications.

Polyhydroxy alkanoates have a wide range of physical and mechanical properties depending on the number of carbon atoms in the constituent monomer units of the polymer chain. Short chain length polyhydroxy alkanoates have 3 to 5 carbon atoms in their monomer units whereas medium chain length polyhydroxy alkanoates have 6 to 14 carbon atoms in their monomer units. Short chain length polyhydroxy alkanoates may be hard crystalline and brittle polymers with high melting points whereas medium chain length polyhydroxy alkanoates are usually soft and elastomeric with lower melting points compared to short chain length polyhydroxy alkanoates.

Polyhydroxy alkanoates may be manufactured using the enzyme polyhydroxy alkanoate synthase. This has resulted in a wide range of available monomer compositions, affording a wide range of associated properties.

Polyhydroxy alkanoates have a narrow range of possible processing conditions and are easily degraded, making these polyesters difficult to process.

Thermally processable polyvinyl alcohols of this invention have been found to be compatible with medium chain length and short chain length polyhydroxy alkanoates. It has been unexpectedly found that co-compositions of polyvinyl alcohol and polyhydroxy alkanoates may produce composite polymers which stabilise both of the individual polymers resulting in an extended range of possible processing conditions.

PLA is a bio-based renewable thermoplastic polyester with a backbone formula [-CHCO-]ₙ. It can be prepared via condensation of lactic acid or via ring-opening polymerisation of lactide. PLA is a versatile biopolymer that can be used in various processing applications such as blown film, extrusion coating, fibre spinning and thermoforming. It is also used in this invention to improve heat resistance, mechanical properties and barrier properties.

In embodiments in which the polyester is polylactic acid (PLA), the polylactic acid may comprise the L-stereoisomer or the meso, DL-form. Thermally processable polyvinyl alcohol of the present invention may be reacted with polylactic acid with a relatively high content of the L-isomer. For medical applications the D and L forms have been used.. These forms have different properties. D-PLA has a crystalline structure melting at 180°C and a glass transition temperature (T_{g}) of 67°C. D, L-PLA has an amorphous structure with T_{g} of 57°C.

The polylactic acid may be a co-polymer of L-lactide containing 2 wt% to 4 wt% of D-lactide in the polymer chain. The use of the co-polymer may rduce the melting temperature (Tₘ) from about 180°C to 190°C for pure poly(L-lactic acid) to 140°C to 150°C for the PLA co-polymer. The PLA co-polymer may be rigid and stiff having a T_{g} of 60°C to 65°C.

PCL is a biodegradable linear aliphatic polyester which can be synthesized via ring-opening polymerisation method from ε-caprolactone monomers. In conjunction with other biopolymers, the use of PCL in accordance with this invention increases the biodegradation of the blend, improves processability (i.e., widens the processing window) and increases certain mechanical properties (i.e., enhances flexibility even at much lower temperatures). This polyester may be used in accordance with this invention for various processing applications such as blown film, extrusion coating, injection moulding.

Polybutylene adipate-co-terephthalate (PBAT) is a fully biodegradable random copolymer, aliphatic- aromatic co-polyester of adipic acid, 1,4-butanediol and terephthalic acid. It is a flexible plastic designed for film extrusion and may improve the thermal stability.

Percentages and other quantities referred to in the specification are by weight unless stated otherwise and are selected from any ranges quoted to total 100%.

The invention is further described by means of example, but not in any limitative sense.

The compatibility of the biopolymers with PVOH was evaluated by compounding them using a batch mixer. Thermal analysis of the resultant polymers including TGA and DSC was used to check the thermal stability and processing temperature.

Subsequently, in a scale-up stage, pellets were produced and were trialled on a blown film line or cast line to evaluate processability.

### Raw Materials and Chemicals

### Polyvinyl Alcohols (PVOH)

The polyvinyl alcohols investigated had a degree of hydrolysis from 67 wt% to 89 wt% and a molecular weight range from 4195 g/mol to 70000 g/mol.

| PVOH | Supplier | Molecular Weight, GPC(g/mol) | Degree of Hydrolysis (%) | Viscosity 4% solution (cP) |
|---|---|---|---|---|
| BP-08 | Chang-Chun | 14500 | 86-89 | 8-10 |
| TC-07 | Chang-Chun | 4785 | 67-72 | 5.5 - 6.5 |
| BC-05 | Chang-Chun | 4195 | 72-76 | 5 - 6 |
| 523 | Sekisui | 70000 | 87-89 | 23.0 - 27.0 |
| 203 | Sekisui | 10500 | 87-89 | 3.5 - 4.5 |

### Additives

| Chemical Name | Supplier | Molecular weight (g/mol) | Melting point (°C) | Boiling point (°C) |
|---|---|---|---|---|
| Dipentaerythritol | Perstorp | 254.28 | 215-218 | 356 |
| Triacetin | Brenntag | 218 | 3 | 258 |
| ε-caprolactone | Gantrade | 114.14 | -1 | 241 |

A combination of plasticizers was used in the formulation to reduce the melting point of the polymer, ease the processing and to avoid degradation at the temperatures required for melting and extrusion processing. Water is used as the processing aid and sodium benzoate as a stabilizer.

### Biopolymers

The grade of polybutylene adipate-co-terephthalate (PBAT) was as follows.

| Product | Supplier | Melting Temperature(°C) | Decomposition Temperature (°C) |
|---|---|---|---|
| PBAT (eco-flex F Blend C 1200) | BASF | 100-120 | >280°C |

| Product | Supplier | Molecular weight (g/mol) | MFI 190°C/2.16 kg (g/10min) |
|---|---|---|---|
| PBAT (eco-flex F Blend C1200) | BASF | 50,000-100,000 | 2.7 - 4.9 |

The following grades of polylactic acid (PLA) were used.

| Product | Supplier | Purity (% isomer) | Melting Temperature (°C) |
|---|---|---|---|
| Luminy L175 | TotalEnergies Corbion | >99% L | 175 |
| Luminy LX175 | TotalEnergies Corbion | 96% L | 155 |
| Luminy LX975 | TotalEnergies Corbion | 88% L | 130 |
| Luminy D070 | TotalEnergies Corbion | >99% D | 175 |

| Product | Decomposition Temperature (°C) | Molecular weight (g/mol) | MFI (Flow, 190°C/2.16 kg)(g/10 min) |
|---|---|---|---|
| Luminy L175 | > 230 | 175,00 | 3 |
| Luminy LX175 | > 230 | 175,00 | 6 |
| Luminy LX975 | > 230 | 175,00 | 4 |
| Luminy D070 | > 230 | 70,000 | >50 |

The following grades of polycaprolactone (PCL) were used.

| Product | Supplier | Molecular weight (g/mol) | Melting range (°C) | Decomposition Temperature (°C) | MFI (Flow, 190 (°C/2.16 kg)(g/10 min) |
|---|---|---|---|---|---|
| CAPA 6500D | Ingevity | 50,000 | 58 - 60 | > 200 | 30 |
| CAPA 6800D | Ingevity | 80,000 | 58 - 60 | > 200 | 4.1 |

### Compatibiliser

A vinyl acetate-ethylene based copolymer compatibiliser, Vinnex 2504 was used.

| Product | Supplier | Melting Temperature (°C) | Decomposition Temperature (°C) | MFR index (cm³/10 min)(g/10 min) |
|---|---|---|---|---|
| Vinnex 2504 | Wacker | N/A | > 250 | 2.1 |

### Formulations and Analysis

The following formulations were prepared and their properties evaluated.

In this specification, dipentaerythritol is abbreviated to Di-Penta.

### Formulations LV3, LV4, LV5, LV72

| | Formulation | LV3 | LV4 | LV5 | LV72 |
|---|---|---|---|---|---|
| PVOH | TC-07 | 64.7 5 | | 48.3 0 | |
| | BC-05 | | 64.75 | | 64.75 |
| | BP-08 | | | 12.0 7 | |
| Additives | Water | 5 | 5 | 9.39 | 5 |
| | Triacetin | 10 | 10 | 10 | 10 |
| | Di-Penta | 5 | 5 | 4.99 | 5 |
| | ε-caprolactone | | | | |
| | sodium benzoate | 0.25 | 0.25 | 0.25 | 0.25 |
| Biopolym ers | PBAT | 15 | 15 | 15 | |
| | PLA (Luminy LX175) | | | | 15 |
| | PLA (Luminy D070) | | | | |
| | PLA (Luminy LX975) | | | | |
| Total Weight % | | 100 | 100 | 100 | 100 |

### Formulations LV74, LJ73, LV75, LV91, LV92

| | Formulation | LV74 | LJ73 | LV75 | LV91 | LV92 |
|---|---|---|---|---|---|---|
| PVOH | TC-07 | | | | | |
| | BC-05 | 64.75 | 64.75 | 64.75 | 64.75 | 64.75 |
| | BP-08 | | | | | |
| Additives | Water | 5 | 5 | 5 | 5 | 5 |
| | Triacetin | 10 | 10 | 10 | 10 | 10 |
| | Di-Penta | | 5 | | 5 | 35 |
| | ε-caprolactone | 5 | | 5 | | 5 |
| | sodium benzoate | 0.25 | 0.25 | 0.25 | 0.25 | 0.25 |
| Biopolymers | PBAT | | | | | |
| | PLA (Luminy LX175) | 15 | | | | |
| | PLA (Luminy D070) | | 15 | 15 | | |
| | PLA (Luminy LX975) | | | | 15 | 45 |
| Total Weight % | | 100 | 100 | 100 | 100 | 100 |

### Formulations LV103, LV88, LV91, LV94

| | Formulation | LV103 | LV88 | LV91 | LV94 |
|---|---|---|---|---|---|
| PVOH | Chang Chun BC-05 | 61.00 | 64.75 | 64.75 | 64.75 |
| Additives | Water | 5.00 | 5.00 | 5.00 | 5.00 |
| | Triacetin | 10.00 | 10.00 | 10.00 | 10.00 |
| | Di-Penta | 5.00 | 5.00 | 5.00 | |
| | ε-caprolactone | | | | 5.00 |
| | sodium benzoate | 0.25 | 0.25 | 0.25 | 0.25 |
| | Vinnex 2504 | 3.75 | | | |
| Biopolymers | PLA (Luminy LX175) | | 10.5 | 10.5 | 10.5 |
| | PLA (Luminy LX975) | 15.00 | | | |
| | PCL (CAPA 6500D) | | | 4.5 | |
| | PCL (CAPA 6800D) | | 4.5 | | 4.5 |
| Total Weight (%) | | 100 | 100 | 100 | 100 |
| PVOH properties | Mw PVOH (g/mol) | 4,195 | 4,195 | 4,195 | 4,195 |
| | Hydrolysis PVOH (%) | 74 | 74 | 74 | 74 |
| | Viscosity (cPs) | 5.5 | 5.5 | 5.5 | 5.5 |
| Batch mixer results | Max torque (Nm) | 12.5 | 14 | 14.8 | 11.4 |
| | Levelling torque (Nm) | 4 | 5.1 | 5 | 5.5 |
| DSC | Tg (°C) | 44.42 | 54.72 | 41.41 | 41.57 |
| | 1^{st} Melting peak (°C) | 171.4 | 167.51 | 169.74 | 172.44 |
| | 2^{nd} Melting peak (°C) | 160.52 | 157.76 | 150.47 | 159.57 |
| | Recrystallisation peak (°C) | 94.51 | 95.93 | 94.89 | 99.44 |

### Formulations LV95, LV97, LV98, LV99, LV100

| | Formulation | LV95 | LV97 | LV98 | LV99 | LV100 |
|---|---|---|---|---|---|---|
| PVOH | Chang Chun BC-05 | 64.75 | 64.75 | 64.75 | 64.75 | 64.75 |
| Additives | Water | 5.00 | 5.00 | 5.00 | 5.00 | 5.00 |
| | Triacetin | 10.00 | 10.00 | 10.00 | 10.00 | 10.00 |
| | Di-Penta | | | | | |
| | ε-caprolactone | 5.00 | 5.00 | 5.00 | 5.00 | 5.00 |
| | sodium benzoate | 0.25 | 0.25 | 0.25 | 0.25 | 0.25 |
| | Vinnex 2504 | | 0.25 | 0.25 | 0.38 | 0.75 |
| Biopolymers | PLA (Luminy LX175) | 10.5 | 10.425 | 10.425 | 10.31 | 10.13 |
| | PLA (Luminy LX975) | | | | | |
| | PCL (CAPA 6500D) | 4.5 | 4.425 | | 4.31 | 4.13 |
| | PCL (CAPA 6800D) | | | 4.425 | | |
| Total Weight (%) | | 100 | 100 | 100 | 100 | 100 |
| PVOH properties | Mw PVOH (g/mol) | 4,195 | 4,195 | 4,195 | 4,195 | 4,195 |
| | Hydrolysis PVOH (%) | 74 | 74 | 74 | 74 | 74 |
| | Viscosity (cPs) | 5.5 | 5.5 | 5.5 | 5.5 | 5.5 |
| Batch mixer results | Max torque (Nm) | 9.5 | 11.4 | 9.9 | 12 | 14.8 |
| | Levelling torque (Nm) | 5.1 | 5.6 | 5.5 | 5.4 | 5.6 |
| DSC | Tg (°C) | 50.60 | 43.12 | 48.63 | 49.89 | 42.87 |
| | 1^{st} Melting peak (°C) | 172.32 | 171.60 | 166.71 | 169.57 | 168.08 |
| | 2^{nd} Melting peak (°C) | 157.81 | 157.46 | 157.45 | 157.18 | 159.15 |
| | Recrystallisation peak (°C) | 97.55 | 98.23 | 99.25 | 98.51 | 102.21 |

### Formulations LV142, LV126, LV117

| | Formulation | LV142 | LV126 | LV117 |
|---|---|---|---|---|
| PVOH | Sekisui 203 | 56.33 | 56.33 | 55.35 |
| | Sekisui 523 | 14.07 | 14.07 | 15.05 |
| Additives | Water | 4.6 | 4.6 | 4.6 |
| | Triacetin | | | |
| | Di-Penta | | | |
| | ε-caprolactone | 9.75 | 9.75 | 9.75 |
| | sodium benzoate | 0.25 | 0.25 | 0.25 |
| Biopolymers | PLA (Luminy LX175) | | 15.00 | |
| | PLA (Luminy L175) | | | |
| | PLA (Luminy LX975) | 15.00 | | |
| | PLA (Luminy D070) | | | 15.00 |
| Total Weight % | | 100 | 100 | 100 |
| PVOH properties | Mw PVOH (g/mol) | 61,924 | 61,924 | 46,587 |
| | % Hydrolysis PVOH | 72.54 | 72.54 | 72.54 |
| | Viscosity (cPs) | 6.76 | 6.76 | 7.00 |
| Batch mixer results | Max torque (Nm) | 12.7 | 16.3 | 10.8 |
| | Levelling torque (Nm) | 6.1 | 7.2 | 6.7 |
| DSC | Tg (°C) | 68.11 | 65.3 | 57.06 |
| | 1^{st} Melting peak (°C) | 165.32 | 161.28 | 140.11 |
| | 2^{nd} Melting peak (°C) | 159.83 | 154.22 | N/A |
| | Recrystallisation peak (°C) | 91.18 | 88.8 | 56.61 |

### Pilot Plant Scale Up

The formulations LV3, LV4 and LV5 were selected to scale up to undergo primary processing (via compounding extrusion) to assess the processability and produce pellets. Then, a secondary processing (via blown film line and cast line) was used to assess the formulation and determine if it met the adhesion requirements against the biopolymer layer. These formulations were tested on a laboratory cast line. The results showed good adhesion between the biopolymer and polyvinyl alcohol layers after 105 days.

For the formulations LV3 and LV5, the extruder was a Zeppelin RHC25, having 12 temperature zones. The LID ratio for this extruder was 46. Liquids were fed first to lubricate the barrel and after 1 to 2 minutes the solid feeder started feeding the solids. The residence time of the polymer was 5 minutes or less.

### 1. Formulation LV3

| | |
|---|---|
| PVOH TC-07 | 64.75 |
| PBAT Ecoflex | 15 |
| Water | 5 |
| Sodium benzoate | 0.25 |
| Di-Penta | 5 |
| Triacetin | 10 |
| Total weight % | 100 |

In this experiment, PVOH TC-07, Di-penta and Ecoflex PBAT were mixed and fed in a solid feeder. A separate solid feeder was used for sodium benzoate. Water and triacetin were fed using two separate liquid feeders.

The screw speed was set to 150 rpm and the throughput was set to 6 kg/hr. The table below shows the temperature profile.

### Zones 0 to 5

| | | | | | | |
|---|---|---|---|---|---|---|
| Zone | 0 | 1 | 2 | 3 | 4 | 5 |
| T (°C) | x | 5 | 5 | 15 | 75 | 175 |

### Zones 6 to 11 & Die

| | | | | | | | |
|---|---|---|---|---|---|---|---|
| Zone | 6 | 7 | 8 | 9 | 10 | 11 | Die |
| T (°C) | 250 | 250 | 250 | 230 | 205 | 190 | 180 |

The melt temperature during the process was 171°C.

### 2. Formulation LV5

| | |
|---|---|
| PVOH TC-07 | 48.30 |
| PVOH BP-08 | 12.07 |
| PBAT Ecoflex | 15 |
| Water | 9.39 |
| Sodium benzoate | 0.25 |
| Di-Penta | 4.99 |
| Triacetin | 10 |
| Total weight % | 100 |

In this experiment PVOH TC-07, PVOH BP-08, Di-Penta, and Ecoflex PBAT were mixed and fed in a solid feeder. A separate solid feeder was used for sodium benzoate. A separate liquid feeder was used for water.

The screw speed was set to 150 rpm and the throughput was set to 8 kg/hr. The table below shows the temperature profile.

### Zones 0 to 5

| | | | | | | |
|---|---|---|---|---|---|---|
| Zone | 0 | 1 | 2 | 3 | 4 | 5 |
| T (°C) | x | 5 | 5 | 15 | 75 | 175 |

### Zones 6 to 11 & Die

| | | | | | | | |
|---|---|---|---|---|---|---|---|
| Zone | 6 | 7 | 8 | 9 | 10 | 11 | Die |
| T (°C) | 250 | 250 | 250 | 230 | 220 | 200 | 190 |

The melt temperature during the process was 182°C.

For the formulations LV4, LV72, LV103 and LV142, the scale up process used a twin-screw extruder, Coperion ZSK 34 with an LID ratio of 58. In all these formulations liquids were fed first to lubricate the barrel and after 1 to 2 minutes the solid feeder started feeding the solids.

### 3. Formulation LV4

| | |
|---|---|
| PVOH BC-05 | 64.75 |
| PBAT Ecoflex | 15 |
| Water | 5 |
| Sodium benzoate | 0.25 |
| Di-Penta | 5 |
| Triacetin | 10 |
| Total weight % | 100 |

PVOH BC-05 was fed in a separate solid feeder. Di-Penta was fed in a separate solid feeder. Ecoflex PBAT was fed in a separate solid feeder. Sodium benzoate was also fed in a separate solid feeder. A separate liquid feeder was used for water and another separate liquid feeder was used for triacetin.

The screw speed was set to 140 rpm and the throughput was 40 kg/hr. There were 17 zones within the extruder and the temperature profile was:

### Zones 1 to 9

| | | | | | | | | | |
|---|---|---|---|---|---|---|---|---|---|
| Zone | 1 | 2 | 3 | 4 | 5 | 6 | 7 | 8 | 9 |
| T (°C) | 10 | 25 | 50 | 160 | 205 | 225 | 220 | 215 | 215 |

### Zones 10 to 17/Die

| | | | | | | | | |
|---|---|---|---|---|---|---|---|---|
| Zone | 10 | 11 | 12 | 13 | 14 | 15 | 16 | 17/Die |
| T (°C) | 215 | 210 | 205 | 200 | 200 | 200 | 200 | 200 |

The melt temperature during the process was 190°C.

### 4. Formulation LV72

| | |
|---|---|
| PVOH BC-05 | 64.75 |
| PLA (Luminy LX175) | 15 |
| Water | 5 |
| Sodium benzoate | 0.25 |
| Di-Penta | 5 |
| Triacetin | 10 |
| Total weight % | 100 |

PVOH BC-05 was fed in a separate solid feeder. Di-Penta was fed in a separate solid feeder. Luminy LX175(PLA) was fed in a separate solid feeder. Sodium benzoate was also fed in a separate solid feeder. A separate liquid feeder was used for water and another separate liquid feeder was used for triacetin.

The screw speed was set to 140 rpm and the throughput was 40 kg/hr. There were 17 zones within the extruder and the temperature profile was:

### Zones 1 to 9

| | | | | | | | | | |
|---|---|---|---|---|---|---|---|---|---|
| Zone | 1 | 2 | 3 | 4 | 5 | 6 | 7 | 8 | 9 |
| T (°C) | 10 | 25 | 50 | 160 | 205 | 215 | 215 | 215 | 210 |

### Zones 10 to 17/Die

| | | | | | | | | |
|---|---|---|---|---|---|---|---|---|
| Zone | 10 | 11 | 12 | 13 | 14 | 15 | 16 | 17/Die |
| T (°C) | 210 | 205 | 205 | 205 | 205 | 205 | 200 | 200 |

The melt temperature during the process was 190°C. The residence time of the polymer was 5 minutes or less.

### 5. Formulation LV103

| | |
|---|---|
| PVOH BC-05 | 61 |
| PLA (Luminy LX975) | 15 |
| Water | 5 |
| Sodium benzoate | 0.25 |
| Di-Penta | 5 |
| Triacetin | 10 |
| Vinnex 2504 | 3.75 |
| Total weight % | 100 |

PVOH BC-05 was fed in a separate solid feeder. Di-Penta was mixed with Vinnex 2504 and the mixture was fed in one solid feeder. Luminy LX975 was fed in a separate solid feeder. Sodium benzoate was also fed in a separate solid feeder. A separate liquid feeder was used for water and another separate liquid feeder was used for triacetin.

The screw speed was set to 140 rpm and the throughput was 30 kg/hr. There were 17 zones within the extruder and the temperature profile was:

### Zones 1 to 9

| | | | | | | | | | |
|---|---|---|---|---|---|---|---|---|---|
| Zone | 1 | 2 | 3 | 4 | 5 | 6 | 7 | 8 | 9 |
| T (°C) | 10 | 25 | 50 | 150 | 195 | 210 | 210 | 210 | 210 |

### Zones 10 to 17/Die

| | | | | | | | | |
|---|---|---|---|---|---|---|---|---|
| Zone | 10 | 11 | 12 | 13 | 14 | 15 | 16 | 17/Die |
| T (°C) | 210 | 210 | 205 | 200 | 195 | 195 | 195 | 195 |

The melt temperature during the process was 198°C.

### 6. Formulation LV142

| | |
|---|---|
| PVOH 523 | 14.07 |
| PVOH 203 | 56.33 |
| PLA (Luminy LX975) | 15 |
| Water | 4.6 |
| Sodium benzoate | 0.25 |
| ε-caprolactone | 9.75 |
| Total weight % | 100 |

PVOH 523 was fed in a separate solid feeder. PVOH 203 was fed in another separate solid feeder. Luminy LX975 (PLA) was fed in a separate solid feeder. Sodium benzoate was also fed in a separate solid feeder. A separate liquid feeder was used for water. Another separate liquid feeder was used for ε-caprolactone.

The screw speed was set to 140 rpm and the throughput was 30 kg/hr. There were 17 zones within the extruder and the temperature profile was:

### Zones 1 to 9

| | | | | | | | | | |
|---|---|---|---|---|---|---|---|---|---|
| Zone | 1 | 2 | 3 | 4 | 5 | 6 | 7 | 8 | 9 |
| T (°C) | 10 | 25 | 50 | 140 | 190 | 210 | 210 | 210 | 210 |

### Zones 10 to 17/Die

| | | | | | | | | |
|---|---|---|---|---|---|---|---|---|
| Zone | 10 | 11 | 12 | 13 | 14 | 15 | 16 | 17/Die |
| T (°C) | 210 | 210 | 205 | 200 | 200 | 200 | 200 | 200 |

The melt temperature during the process was 199°C. The residence time of the polymer was 5 minutes or less.

During the secondary processing, the above mentioned formulations were trialled on a blown film line. Good adhesion against the biopolymer and polyvinyl alcohol layers was observed.

### Manufacture of Multilayer Film

Various formulations were trialled using blown film lines.

The blown film machine used was a Hosokawa Alpine 3-layer blown film line. This included three extruders with 5 heating zones, a blown film die, air ring with blower and a collapsible frame with nip roll station. The three-layer construction used, was as follows:

| |
|---|
| Biopolymer blends (outer layer) |
| Tie layer (middle layer) |
| Polyvinyl alcohol (inner layer) |

To obtain this construction, each extruder in this machine was fed with a different material i.e., Extruder 1 - Biopolymer blends (PLA/PCL), Extruder 2 - a tie layer formulation and Extruder 3 - Polyvinyl alcohol (PVOH, Hydropol, Trade Mark of Aquapak Polymers Limited.)

The following table shows the barrel temperature profile used for this application.

| | Extruders | Barrel Zones | | | | | Die |
|---|---|---|---|---|---|---|---|
| | | 1 | 2 | 3 | 4 | 5 | |
| T (°C) | Extruder 1 - Biopolymer blends | 180 | 180 | 180 | 180 | 180 | 225 |
| | Extruder 2 - A tie layer formulation | 180 | 180 | 180 | 180 | 180 | |
| | Extruder 3 - Hydropol | 205 | 200 | 200 | 200 | 200 | |

To ensure a stable bubble was obtained, the three extruders (Extruder 1, 2 & 3) were initially fed with low density polyethylene (LDPE). Once the bubble stabilised, PVOH was fed into Extruder 3 first to allow a smooth transitioning from LDPE without disrupting the stability of the bubble. Then, the biopolymer blends were slowly introduced into Extruder 1. This was to ensure both the inner and outer layers maintained their strength and stability. After both the inner and outer layers had transitioned to PVOH and biopolymer blends, respectively, a tie layer formulation was then fed into Extruder 2. Before a sample could be obtained, the bubble travelled into a nip roller which compressed the bubble into a film. Once all three constructions were intact, a film sample was collected to test the film properties such as adhesion, gas barrier properties, elongation at break.

Another blown film machine which was used was a Dr Collin laboratory 5-layer blown film line. This included three extruders with 5-barrel heating zones, 11 die heating zones, air ring with blower and a collapsible frame with nip roll station. As this machine produced a 5-layer film, the constructions used was as follows:

| |
|---|
| Biopolymer blends (outer layer) |
| Tie layer (middle layer) |
| PVOH (Hydropol) (inner layer) |
| Tie layer (middle layer) |
| Biopolymer blends (outer layer) |

To obtain this construction, each extruder in this machine was fed with a different material i.e., Extruder 1 - Biopolymer blends (PLA/PCL), Extruder 2 - a tie layer formulation and Extruder 3 - PVOH (Hydropol).

The following table shows the barrel temperature profile.

| | Extruders | Barrel Zones | | | | | Die (Zone 1-11) |
|---|---|---|---|---|---|---|---|
| | | 1 | 2 | 3 | 4 | 5 | |
| T (°C) | Extruder 1 - Biopolymer blends | 180 | 180 | 180 | 180 | 180 | 210 |
| | Extruder 2 - A tie layer formulation | 180 | 180 | 180 | 180 | 180 | |
| | Extruder 3 - PVOH (Hydropol) | 205 | 200 | 200 | 200 | 200 | |

To ensure a stable bubble was obtained, three of these extruders (Extruder 1, 2 & 3) were initially fed with low density polyethylene (LDPE). Once the bubble stabilised, PVOH (Hydropol) was fed into Extruder 3 first to allow a smooth transitioning from LDPE without disrupting the stability of the bubble. Then, the biopolymer blends were slowly introduced in Extruder 1. This was to ensure both the inner and outer layers maintained their strength and stability. After both the inner and outer layers had transitioned to PVPH (Hydropol) and biopolymer blends, respectively, a tie layer formulation was then fed into Extruder 2.

The bubble then travels between collapsing frames which compresses the bubble into a film and continues to travel into a nip roller. A sample can then be collected for laboratory testing.

To determine the feasibility of the tie layer role in the multilayer film, the tie layer must adhere to the inner layer (biopolymer blends) and to the outer layer (Hydropol) which is conducted via peel adhesion testing.

The properties of the films were analysed and were found to be satisfactory for commercial use.

## Claims

1. A tie layer composition comprising:
a reaction product of a polyvinyl alcohol polymer composition or a composition comprising a blend of two or more polyvinyl alcohols, the polyvinyl alcohol composition being thermally processable and having a degree of hydrolysis in the range of 65 wt% or greater;
a biodegradable polyester selected from the group consisting of: polylactic acid (PLA); polyhydroxy alkanoates (PHA); polybutylene adipate terephthalate (PBAT); polybutylene succinate (PBS); polybutylene succinate co-butylene adipate (PBSA); polyglycolic acid (PGA); polybutylene succinate co-terephthalate (PBST); polybutylene adipate co-furanoate (PBAF); polyethylene furoanate (PBF) and polycaprolactam (PCL);
a plasticiser comprising one or more compounds selected from the group consisting of: diglycerol, triglycerol, xylose, D-mannitol, dipentaerythritol, triacetin, 1,4-butanediol, 3,3-dimethyl-1,2-butanediol, caprolactam and caprolactone; and
a stabilizer selected from the group consisting of: sodium stearate, potassium oleate, sodium benzoate, calcium stearate and mixtures thereof.

2. The tie layer composition as claimed in Claim 1; wherein the biodegradable polyester is selected from the group consisting of:
polylactic acid (PLA); polyhydroxy alkanoates (PHA); polybutylene adipate terephthalate (PBAT); and polycaprolactam (PCL).

3. The tie layer composition as claimed in Claim 1 or 2, comprising:
| | |
|---|---|
| a thermally processable polyvinyl alcohol composition | 85 wt% to 99 wt%, and |
| a biopolymer composition | 1 wt% to 15 wt%. |

4. The tie layer composition as claimed in Claim 1 or 2, comprising:
| | |
|---|---|
| a thermally processable polyvinyl alcohol composition | 1 wt% to 20 wt%; and |
| a biopolymer composition | 80 wt% to 99 wt%. |

5. The tie layer composition as claimed in any preceding claim; wherein the polyvinyl alcohol is homopolymeric polyvinyl alcohol.

6. The tie layer composition as claimed in any preceding claim, further comprising a compatibiliser.

7. A tie layer composition as claimed in any of claims 1 to 6, comprising a blend of two or more polyvinyl alcohol polymers.

8. A tie layer composition as claimed in claim 7 comprising a blend of two polyvinyl alcohol polymers with weight average molecular weights in the range 22,000 to 38,000.

9. A tie layer as claimed in any of claims 1 to 8, wherein the polyvinyl alcohol is homopolymeric polyvinyl alcohol.

10. A method of manufacture of a tie layer composition comprising the steps of:
providing ingredients comprising:
a polyvinyl alcohol composition comprising polyvinyl alcohol or a blend thereof having a degree of hydrolysis in the range of 88 wt% or greater;
a processing aid, a plasticiser and a reactive stabiliser;
wherein the plasticiser is selected from the group consisting of: diglycerol, triglycerol, xylose, D-mannitol, triacetin, dipentaerythritol, 1,4-butanediol, 3,3-dimethyl-1,2-butanediol, caprolactam, caprolactone and mixtures thereof;
wherein the stabiliser is selected from the group consisting of:
sodium stearate, potassium oleate, sodium benzoate, calcium stearate, dimethyl propionic acid, and mixtures thereof; and
a biopolymer selected from the group consisting of: : polylactic acid (PLA); polyhydroxy alkanoates (PHA); polybutylene adipate terephthalate (PBAT); polybutylene succinate (PBS); polybutylene succinate co-butylene adipate (PBSA); polyglycolic acid (PGA); polybutylene succinate co-terephthalate (PBST); polybutylene adipate co-furanoate (PBAF); polyethylene furoanate (PBF) and polycaprolactam (PCL);
introducing the ingredients into a mixing reactor;
wherein the mixing reactor comprises a blending chamber having a primary inlet, a primary outlet and at least two inter-engaging components extending between the primary inlet and primary outlet, the components being arranged to apply a shearing force to the polymer while the polymer is conveyed by the components from the inlet through a reaction zone to the outlet; and
wherein the blending chamber comprises a plurality of heated regions arranged so that the mixture is subjected to a temperature profile whereby the temperature increases from the inlet to the outlet;
a secondary outlet located between the reaction zone and primary outlet arranged to allow removal of processing aid from the chamber;
the process comprising the steps of:
reacting the polyvinyl alcohol and biopolymer in the reaction zone to form a co-compound of the polymers; and
allowing the tie layer composition to pass from the primary outlet.

11. A method of manufacture as claimed in Claim 10; wherein the biodegradable polyester is selected from the group consisting of:
polylactic acid (PLA); polyhydroxy alkanoates (PHA); polybutylene adipate terephthalate (PBAT); and polycaprolactam (PCL).

12. A polymer film comprising a barrier layer comprising a polyvinyl alcohol composition; and
a tie layer engaged with the barrier layer, the tie layer comprising a composition as claimed in any preceding claim.

13. A multi layered polymer film comprising:
an inner layer comprising a polyvinyl alcohol composition comprising a reaction product of a polyvinyl alcohol polymer composition or a composition comprising a blend of two or more polyvinyl alcohols the polyvinyl alcohol composition being thermally processable and having a degree of hydrolysis in the range of 65 wt% to 92 wt%;
two outer layers, each outer layer located on a respective side of the inner layer, the outer layers comprising a biopolyester selected from the group consisting of:
a biodegradable polyester selected from the group consisting of: polylactic acid (PLA); polyhydroxy alkanoates (PHA); polybutylene adipate terephthalate (PBAT); polybutylene succinate (PBS); polybutylene succinate co-butylene adipate (PBSA); polyglycolic acid (PGA); polybutylene succinate co-terephthalate (PBST); polybutylene adipate co-furanoate (PBAF); polyethylene furoanate (PBF) and polycaprolactam (PCL);
a tie layer located between the inner layer and a respective outer layer;
wherein the tie layer comprises a composition as claimed in any of claims 1 to 9.
